# EUROPEAN PATENT SPECIFICATION

(11) **EP 1 456 734 B1**
(45) Date of publication and mention of the grant of the patent: **20.06.2007**
(21) Application number: 01275052.7
(22) Date of filing: 20.12.2001
(51) Int. Cl.: G06F 1/16, G06F 3/02, H04M 1/02

(54) **MOBILE TERMINAL DEVICE HAVING FOLDABLE FUNCTIONAL COVER**
MOBILENDGERÄT MIT FALTBARER FUNKTIONSABDECKUNG
TERMINAL MOBILE A COUVERCLE FONCTIONNEL REPLIABLE

(43) Date of publication of application: 15.09.2004
(73) Proprietor: Nokia Corporation, 02150 Espoo (FI)
(72) Inventor: PIHLAJA, Pekka, FIN-00800 Helsinki (FI)
(74) Representative: Becker Kurig Straus
(86) International application number: PCT/EP2001/015130
(87) International publication number: WO 2003/054672

(56) References cited:
- EP-A- 0 776 140
- WO-A-01/53919
- WO-A-95/24007
- GB-A- 2 360 622
- US-A- 6 107 988
- "PERSONAL COMMUNICATOR CONFIGURATIONS" IBM TECHNICAL DISCLOSURE BULLETIN, IBM CORP. NEW YORK, US, vol. 37, no. 6A, 1 June 1994 (1994-06-01), pages 449-453, XP000455841 ISSN: 0018-8689

## Description

The present invention relates to mobile terminal devices for use with foldable keypads. It also relates to mobile terminal devices having foldable keypads to provide customized user interaction interfaces for different purposes. More specifically the invention relates to a mobile terminal device with foldable keypads for different user interactions.

The fact that mobile phones and other mobile terminal devices such as PDA's (personal digital assistants) and pocket computers are getting smarter, smaller and offer more and more different functions, leads to the requirement of more extended and versatile input devices such as keypads. At the same time, however, the size of the mobile terminal devices has to remain the same or even get smaller. The need for relatively large keyboards for small mobile terminal devices is growing all the time when mobile terminal devices decrease in size. Existing solutions encompass foldable mobile terminal devices, or if more applications are needed, solutions such as the Nokia Communicator.

Prior attempts to solve said problems are described in the patent applications W09931800 and W09819434. WO9931800 describes a mobile terminal device where two wings are opened up to enlarge the keyboard. However, when closed, the wings are closed on top of the keyboard side by side, and when opened the size of the keyboard is only twice compared to the closed position. The device described further comprises keyboard elements which comprise input elements (buttons touchpads) on each side of a foldable keypad element.
In W09819434 a mobile phone is described which has a foldable keyboard, but the keyboard inside the phone has the same size as the keyboard of the outer side and there is only one wing or cover.

Other approaches using foldable devices are disclosed in the documents WO 01 53919 WO 95/24007 and EP 0 776 140 A1. Document WO O1 53919 discloses a three-element folding device that provided a nearly continuous screen in an open position and a small touch screen display in a closed position. Document EP 0 776 140 A1 discloses a three-element folding device that provided a nearly continuous screen over a cover element and a main housing part and a QWERTY-keyboard on the other cover element in an open position and a small telephone interface in a closed position. Document WO 95/24007 discloses a laptop computer device with detachable housing, display and keyboard elements.

All the above approaches for folding keyboards have in common that they comprise only two conditions: one open condition and a closed condition. WO9931800 further comprises a partially open condition, with an opened display element and a closed keypad element. The closed condition comprises a first (smaller) keypad on an outer surface and the open condition comprises a second (bigger) keypad on the outer surface.

It is one object of the present invention to provide a mobile terminal device with different input interfaces or communication devices of operative surfaces (keypads) for multiple input and control purposes.

It is another object of the present invention to provide a mobile terminal device with different exchangeable operative surfaces.
These objects of the present invention are solved bay a mobile terminal device with the features of present claim 1, additional embodiments are disclosed in the dependent claims 2 to 14.

According to an aspect of the present invention a mobile terminal device is provided comprising a housing and two functional covers pivotably attached to said housing. Said functional covers have at least two operative surfaces. Said covers are movable between two closed positions, wherein in both of said closed positions one cover is conforming to a part of the housing adjacent said cover, and the other cover is overlapping the first cover in a conforming way. In at least one of said closed positions one of said operative surfaces is located on an outer surface facing away from said housing and is accessible from the outside.

The expression "operative surface" is to denote input and/or output and/or interaction elements such as keyboards, keypads, displays, monitors, touchscreen monitors, mousepads, trackballs, gaming devices and the like.

More advanced embodiments of said mobile terminal device may offer more than two covers with more than two closed positions in which each closed position exposes another specialized man machine interface to a user. The two covers can both be directly connected to said housing, e.g. with a hinge, or be indirectly connected to the housing, wherein both covers are pivotably connected to each other, and one of the covers is connected to the housing. Such a device can be embodied e.g. in form of a triptych with three panels of substantially equal size so that both covers may be used in an open position, or, depending on which panel is closed first, only the backside of the panel closed as second is visible. The covers may comprise engaging means to maintain the open position when the device is held by a user to prevent that the covers inadvertently close under normal use.

Preferably, said functional covers have operative surfaces on both sides of said covers. Thereby a first operative surface is accessible in a closed position and a second operative surface is accessible in an open position of said cover. A first operative surface of said cover is facing away and can be accessed in a closed position while the other operative surface is facing towards an adjacent surface of the housing. In an open position the other operative surface can be accessed in an open position of the cover.

Advantageously, said operative surface accessible from the outside in said first closed position is different from said operative surface accessible from the outside in said second closed position. So a user can change the functionality and the appearance of the mobile device by changing from one closed position to the other.

Conveniently, the covers of the mobile terminal device are movable to an open position, wherein a surface of the housing is exposed. In this open position both covers are in an open position, and the surface conformed by at least one of the covers in both closed positions is exposed. If this surface of the housing comprises a functional surface, it is accessible in the open position.

In an open position all operative surfaces can be used at the same time. The open position includes the advantage that the area of the user interface e.g. areas occupied by display and input buttons rises, while the overall size of the mobile terminal device in the closed position can be small. When applied e.g. on a portable DVD- (Digital Versatile Disc) video player with display, and DVD- slots and control interfaces, the display can be in a first closed "transport" position, with said operative surfaces and said slots located on the inside of the device, wherein a standard open position with the display and the operative surface is accessible, and a second closed "mobile player" position with only the display is exposed for mobile video access e.g. in vehicles.

Conveniently, said housing has an operative surface. The covers have outer and an inner surfaces, wherein in the closed position the outer surfaces can face towards a user, and the inner surfaces are conforming to said housing or the other cover. In the open position, the operative surface of the housing and the inner surfaces of the covers are forming one combined surface facing towards a user. Thereby the functional surface of said housing and said inner functional surfaces of said covers can be designed to form a single user interface composed of e.g. two or three parts. So the operative surface of the housing is located on a part of said housing covered by one of the covers in said closed positions.

Advantageously, in said open position said operative surface of said housing and at least one of said operative surfaces of said covers are usable. Conveniently all operative surfaces are usable, in said open position. This is especially useful if a main functionality of the mobile device is only accessible in the open position. So the above described two- or three-part inner user interface is usable in the open position.

Preferably, the at least two covers have a substantially triangular cross section. The covers can have a curvilinear triangular shaped cross section, too. The edges and corners can be rounded to improve the ergonomic appearance of the mobile terminal device.

Preferably, said mobile terminal device further comprises at least one display. The display can be located on the housing, on said cover or even in said operative surfaces. The display can e.g. be a touch screen display. The display can be a specialized e.g. alpha numerical or a dot matrix display. The display can be monochrome or color.

Advantageously, at least one of said covers is detachably attached to said housing. In the simplest case, the design of the cover can be adapted to personal preferences of a user. If the detachably mounted cover include an operative surface, a detachably mounted cover includes multiple advantages, e.g. maintenance and repair operations can be simplified. Detachably mounted covers can further offer an option to customize the mobile terminal device by exchanging one cover with a certain operative surfaces e.g. a telephone keypad with another cover with e.g. a MP3-player. The detachably mounted covers may e.g. comprise a power supply for an electronic element in the mobile terminal device, or even specialized electronic modules.

Conveniently, said operative surfaces can be detachably attached to said housing and said cover respectively. Such detachably attached operative surfaces enable a user to customize e.g. a front side and a backside of a cover or a housing independently from the other side of said cover or said housing.

Advantageously, said mobile terminal device, further comprises switching means to activate or disable at least one of said operative surfaces. Said switching means can be one or more manually operated switches on said mobile terminal device to activate or deactivate one of said operative surface. The switching means can be a mechanic switch, automatically operated by the movement or the position of the covers. The switch can be magnetically operated. The switching device can be e.g. an acceleration sensor or a light sensor, to detect the actual position or a movement of the covers of the mobile terminal device to activate e.g. operative surfaces directed to the counter gravitation direction.

Advantageously, said mobile terminal device can be a mobile communication device, a mobile computer device, or a foldable keyboard. The device is not limited in its actual function, and can be e.g. a remote control, a measurement device such as an oscilloscope or the like. The device is foldable and can be folded in a way that different and maybe customized interaction interfaces are accessible in the different closed states. According to one embodiment of the invention, the mobile terminal device is a multi purpose device that is foldable to expose different user interaction interfaces for different purposes in the closed state.

According to another aspect of the present invention a method for folding a mobile terminal device to expose different outer surfaces is provided. The mobile terminal device, comprises a housing, at least two covers pivotably attached to said housing and movable between two closed positions, conforming to a part of the housing adjacent said cover in both closed positions. At least two different operative surfaces are arranged on at least one of said housing and said at least two covers in a way that in one of said closed positions one of said operative surfaces is located on an outer surface facing away from said housing and is accessible from the outside. The method comprises the step of: pivoting a first of said at least two covers from a first closed position an open position, pivoting a second said at least two covers from a first closed position to an open position, pivoting said first cover from said open position to a second closed position, and pivoting said second cover from said open position to a second closed position exposing at least one different outer surface.

It should be noted that the method of refolding said mobile terminal device, by executing said steps in an inverted sequence should fall under the scope of the present invention, too.

In the following, the invention will be described in detail by referring to the enclosed drawings in which:
Figures 1A to 1E depict cross sections of a mobile terminal device in different folding positions according to one embodiment of the present invention.
Figure 2A to 2D depict other embodiments of mobile terminal devices according to the present invention.
Figures 3A to 3G depict user interaction interfaces of a mobile terminal device according to another embodiment of the present invention.
Figure 4 depicts an embodiment of a cover with a detachable operative, surface according to another embodiment of the present invention.

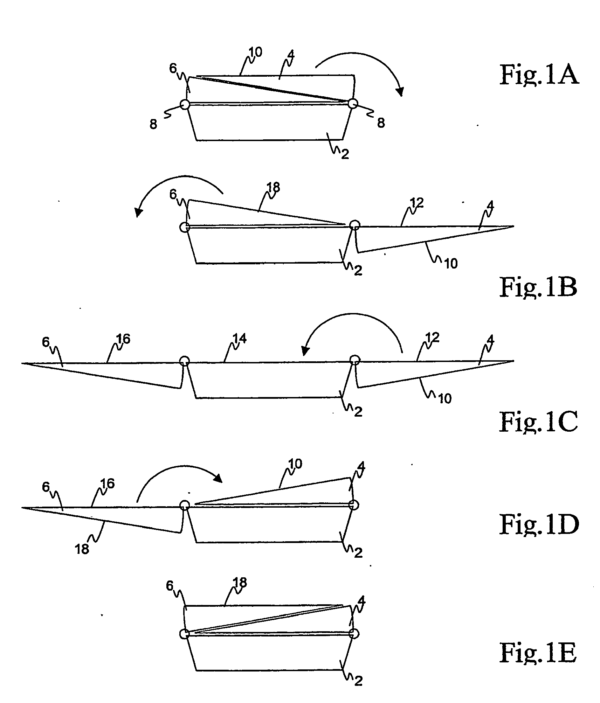

The figures 1A to 1E show cross-sections of a mobile terminal device at the level of the keypad, in the five different positions of the mobile terminal device. The picture should be considered only as a schematic representation of the principle of the invention. There are several ways in which the cross-sections can be modified to optimize them for an actual product. The Invention presents a new way to implement bigger keyboard in basic mobile terminal devices such as mobile phones. At the same time the new construction allows use of several independent keyboards at the same mobile terminal device without the need to increase the size of the mobile terminal device radically. The keyboard has two wings or covers that are overlapping each other in the closed positions (see figures 1A to 2D). Because wings are shaped as a triangle when seen from side, they can be arranged in two different closed position this way presenting two different small keyboards/keypads to user. When wings are opened the keyboard area is three times bigger and this enables designers e.g. to implement a qwerty-keyboard in small electrical devices.

The invention also improves the usability when special keyboards for different kind of applications can be implemented in a single mobile terminal device. The mobile terminal device comprises a housing 2 and two covers 4, 6. The two covers 4, 6 are pivotably connected to the housing by means of two hinges 8. In Figure 1A, both covers 4, 6 are in a closed position, and the cover 4 is overlapping the cover 6. In the first closed position only the outer surface 10 of cover 4 is visible. In Fig. 1A an arrow shows the first movement of the cover 4, to open the mobile terminal device.

In figure 1B, the cover 4 is in an open position, and the device exhibits the inner surface 12 of cover 4 and the outer surface 18 of cover 6. This describes a partially open position of the mobile terminal device. In Fig. 1B an arrow indicates the second movement to fully open the mobile terminal device.

In figure 1C, both covers 4, 6 are in an open position, and the device exhibits the inner surface 12, 14, 16 of the mobile terminal device. The inner surface of the mobile terminal device in the open condition exhibits an interface large enough to hold e.g. a qwerty-keyboard. An arrow shows the movement to partially close the mobile terminal device.

Figure 1D depicts the partially closed position of the mobile terminal device. Figure 1E depict the fully closed position of both covers 4, 6 in the second closed position. In the second closed position the cover 6 is fully overlapping the cover 4, the device exhibits the outer surface 18 of the cover 6 on its outer surface.

If the mobile terminal device is e.g. a mobile communication device, figure 1A exhibits e.g. an ITU-T (phone) keypad (first interface) on top. In figure 1C, the "wings" are opened and the communication device presents e:g. a QWERTY-keypad (second interface). In figure 1E the third interface is on top, which can be e.g. a games controller, MP-3 player controller, touch-pad etc.. What the functions of the covers actually are, is of no consequence to the basic principle of the invention. In fact, the covers, or the cover tops, can be made exchangeable to suit different applications. So one of the cover tops can e.g. be a simple cover to protect the interfaces of the mobile terminal device. In a basic version of the device, both surfaces 10, 18 may only contain a cover. So a user can chose which user interface is presented to him by closing the mobile terminal device in the one or the other way.

The hinges do not prove a technical problem as each wing or cover turns about a single immovable axis. The axis can be arranged parallel or not parallel. The data/power connection to the body of the phone can be implemented with an ordinary flexible flat cable. The only technical requirement out of the ordinary is, that the keypads themselves have to be thin, in order to fit into the wings. Domes under a membrane are a tested and a quite sufficiently thin implementation for the wings or covers.

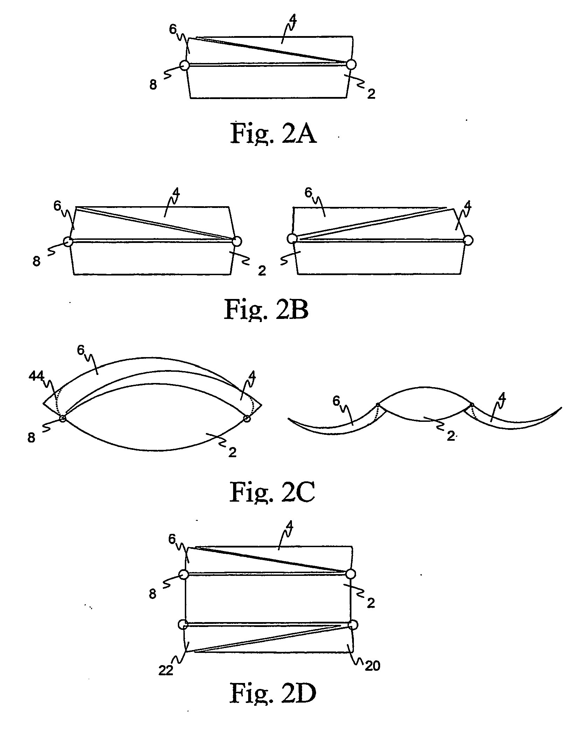

Figures 2A to 2D depict other embodiments of a mobile terminal device according to another embodiment of the present invention. As can be seen in the figures, the embodiments of the mobile terminal device figures 1A, 1E, and 2A in are asymmetrical (relative to the vertical midline of the mobile terminal device). This embodiment includes the advantage that both covers 2, 4 has a similar shape. With such a design, both covers may be manufactured with only one mould, thereby reducing the manufacturing costs.

However, It is possible to make one of the closed positions symmetrical (Figure 2B left side) at the expense of making the other closed position slightly more asymmetrical (figure 2B right side). This is an important notion, because for the appeal of the mobile terminal device, it may be important to make one of the closed positions symmetrical.

It should be noted, that all the embodiments described in the description and in the figures may be manufactured in a symmetric or asymmetric way.

Figure 2C depicts a mobile terminal device with covers 4, 6 having curvilinear triangular cross sections, and the housing has a curvilinear diangular or almond shaped cross section. Any other shapes can be chosen fitting into each other in different mutual overlapping closed positions. The curvilinear triangular shape of the covers or wings 4, 6 may comprise one rounded angle 44 indicated by the dotted line to form a substantially oval cross section in both closed positions.

Figure 2D depicts a cross section of an embodiment of the present invention with four covers 4, 6, 20, 22 on the top and on the bottom sides of the mobile terminal device. Such a multiple cover version of a mobile terminal device, can be used with up to four different customized outer surfaces and two different large inner user interaction interfaces. This may be used to change the outer appearance of the mobile terminal device, if covers with different surfaces and colors are used. A multi cover version may be built with a substantially rectangular or oval cross section, too.

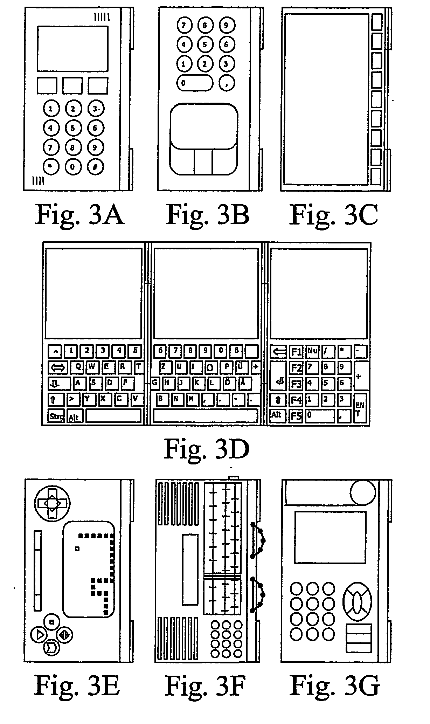

Figures 3A to 3G depict different embodiments of outer and inner surfaces of the mobile terminal device according to different embodiments of the present invention.

Figure 3A depicts an outer surface of a cover with a telephone interface, comprising a keypad and a display, and microphone and loudspeaker openings. An antenna may be integrated in the cover or in the hinge. Such a well known telephone interface can be used to use the mobile terminal device as a conventional mobile telephone.

Figure 3B depicts a user interface with a numerical keypad and a touchpad. With such an interface and e.g. a wireless data transfer, the device may be used to remote control other mobile terminal devices such as TVs and the like. Such a cover may include a laser diode for pointing in presentations, too. The numerical keypad may further include control keys to remote control e.g. other home application devices such as TV-, music-, kitchen-, and access devices.

Figure 3C depicts a screen or display interface. The display may be applied on an inner or an outer surface of the device. If applied to an inner surface, the display may be combined e.g. with a QWERTY- keyboard or the like on another cover or the housing. If the device is e.g. a mobile DVD video player, the screen may be applied to an outer surface of a cover to enable a user to watch a video in the closed state of the device e.g. while travelling. To offer at least a few interaction options for the video player there is a row of keys arranged below the screen, to offer such functions as e.g: "play", "skip", "pause", "stop" and "volume". The screen can be a touch screen display, if required. The depicted interface can be a solar cell too, to charge an internal power storage, to enable the system to be operated as e.g. a survival tool independently of external power supply.

Figure 3D depicts an embodiment of a device according to the invention in an open position. The depicted device includes a three-element display and three-element qwerty-keyboard. Both covers may only contain buttons and have only a height half of the housing, so that the device only has a single display on the central element.

Figure 3E depicts an other outer surface of the device with a game interface. The game interface includes a thumbpad, keys and a display. Such game interfaces are well known and therefore are not described in detail. The game interface may be able to access electronic game software via a slot (not shown) or e.g. via a telephone from a communication network.

Figure 3F depicts a radio cover, with two loudspeakers, a frequency scale, a display, e.g. for battery operation and two wheels on one side for frequency and volume selection. The radio module further comprises an earphone socket indicated as the small rectangle on top. The radio interface can be e.g. am MP3-player, a CD-Player, a micro-cassette recorder or the like, too.

Figure 3G depicts a global positioning system (GPS) interface. As the other interfaces this cover comprises keys and a display. The cover further comprises a pivotably attached antenna module on the top end of the cover.

It should be noted that the covers, modules, interfaces may be exchangeable, to customize the mobile terminal device. It should further be noted that the single outer surfaces covers and modules can be different interfaces of a single central mobile terminal device, and that the different interfaces and modules may be can be interconnected to access the same resources as computing power, power supply, displays and the like. The modules can be independent modules even with independent power supplies, simplifying the construction of the hinges by omitting the electrical connection between the covers and the housing.

So the mobile terminal device may e.g. combine the features of figure 3A, 3D and 3F:
A one hand interface for inputting phone numbers and short texts and for browsing the phone book, is exhibited in the first closed position. In practice, this is the ITU-T interface with T9 capability, as it is familiar to users.
An efficient interface for writing text messages and e-mail exhibited in the open position. A thumb operated version of the familiar qwerty-keyboard is an obvious choice.
A third interface for extra applications the phone might have - MP-3 player, games, camera, GPS-navigator etc., exhibited in the second closed position.

This embodiment of the invention describes how to incorporate three distinct interfaces in a mobile terminal device and still make it look like a conventional monoblock mobile terminal device. It is possible to make the covers 4, 6 with rectangular cross-sections, but at the expense of making the hinges 8 and connecting cables more complicated.

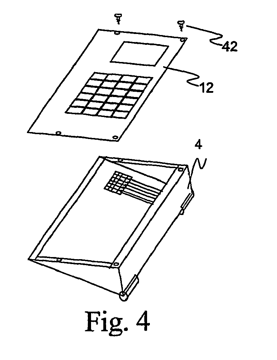

Figure 4 depicts an embodiment of a cover 4 with a detachable operative surface 12 according to another embodiment of the present invention. The cover 4 comprises a substantially triangular cross section and two hinge elements on the right edge. The cover is hollow to be able to hold an interface element 12. In the cover 4 there are contact surfaces to provide an electrical connection to electrical elements in the housing, such as a power supply or an in/out interface. The connection can be designed as an optical fiber, too. The interface element 12 can be mechanically connected to the cover by means of screws 42. The interface element 12 comprises contact elements (not visible) to electrically connect said contact surfaces in the cover 4. The interface element can be e.g. a pocket calculator or the like.

With the help of the Invention,
- three interfaces can be implemented in a single mobile terminal device which looks like a conventional monoblock device.
- One of the interfaces can be made large enough to hold a QWERTY-keyboard.
- The covers or cover tops can be made exchangeable for different applications
- Only conventional technology is needed for implementation

It is to be noted the covers may cover the whole surface of the housing as depicted in the figures. The covers may be designed to cover only a part of the front surface of the mobile device. The partially overlaying covers can be located only in the area of a keypad of e.g. a mobile device so that a display in the housing is visible in the closed and in the open position of the covers. It is further to be noted that the axis of the hinges of the covers can be substantially parallel to each other as depicted in the figures. The axis of the hinges of the covers can be inclined to each other, requiring a complex three dimensional shape of the covers.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently, various options of implementing the invention as determined by the claims, including equivalent implementations, also belong to the scope of the invention.

## Claims

1. Mobile terminal device, comprising:
- a housing (2);
- a first functional cover (4) and a second functional cover (6), both pivotably attached to said housing (2); wherein said covers (4,6) are movable between two closed positions,
- wherein in a first closed position said first cover (4) is conforming to a part of said housing adjacent said first cover, and said second cover (6) is overlapping said first cover (4) in a conforming way, and in a second closed position said second cover (6) is adjacent to and conforming to a part of said housing (2) adjacent said second cover (6), and said first cover (4) is overlapping said second cover (6) in a conforming way,
**characterized in that**
said functional covers (4, 6) each have operative surfaces (10/12, 16/18) on both sides of said covers (4, 6), wherein in both of said closed positions one of said operative surfaces (10, 18) is located on an outer surface facing away from said housing (2) and is accessible from the outside.

2. Mobile terminal device according to claim 1, wherein said covers (4, 6) are designed to cover only a part of the front surface of the mobile device and are located in the area of a keypad so that a display in the housing (2) is visible in the closed and in the open positions of the covers (4, 6).

3. Mobile terminal device according to claim 2, comprising a keyboard extending to both said covers, wherein said covers can be arranged in two different closed position, thereby providing two different small keypads by said two covers, and a bigger keyboard, when both said covers are opened.

4. Mobile terminal device according to anyone of the preceding claims, wherein said operative surface (10) accessible from the outside in said first closed position is different from said operative surface (18) accessible from the outside in said second closed position.

5. Mobile terminal device according to anyone of the preceding claims, wherein said covers are movable to an open position, wherein a surface of the housing is exposed.

6. Mobile terminal device according to claim 5, wherein in said open position all operative surfaces are usable.

7. Mobile terminal device according to anyone of claims 1 to 6, wherein said housing (2) has an operative surface (14) on a part of said housing (2) covered by one of the covers (4, 6) in said closed positions.

8. Mobile terminal device according to anyone of claims 1 to 7, wherein in said open position said operative surface (14) of said housing and at least one of said operative surfaces (10/12, 16/18) of said covers (4, 6) are usable.

9. Mobile terminal device according to anyone of claims 1 to 8, wherein said at least two covers (4, 6) have a triangular cross section.

10. Mobile terminal device according to one of claims 1 to 9, further comprising at least one display.

11. Mobile terminal device according to anyone of claims 1 to 10, wherein at least one of said covers (4, 6) is detachably attached to said housing (2).

12. Mobile terminal device according anyone of the preceding claims, wherein at least one of said at least four operative surfaces (10/12, 16/18) of said covers (4, 6) is detachably attached.

13. Mobile terminal device according to anyone of the preceding claims, further comprising switching means to activate or disable at least one of said operative surfaces (10, 12, 14, 16, 18).

14. Mobile terminal device as described in any one of claims 1 to 13, wherein said mobile terminal device is a mobile communication device, a mobile computer device or a mobile foldable keyboard.

## Patentansprüche

1. Mobiles Endgerät, umfassend:
ein Gehäuse (2);
eine erste funktionale Abdeckung (4) und eine zweite funktionale Abdeckung (6), die beide schwenkbar an dem Gehäuse (2) befestigt sind, wobei die beiden funktionalen Abdeckungen (4, 6) zwischen zwei geschlossenen Positionen beweglich sind,
wobei in einer ersten geschlossenen Position die erste Abdeckung (4) sich an einen Teil des Gehäuses (2) fügt, der an die erste Abdeckung (4) angrenzt, und die zweite Abdeckung (6) die erste Abdeckung (4) in anfügender Weise abdeckt, und in einer zweiten geschlossenen Position die zweite Abdeckung (6) sich an einen Teil des Gehäuses (2) fügt, der an die zweite Abdeckung (6) angrenzt, und die erste Abdeckung (4) die zweite Abdeckung (6) in anfügender Weise abdeckt,
**dadurch gekennzeichnet, dass**
die funktionalen Abdeckungen (4, 6) jeweils betriebsfähige Oberflächen (10/12, 16/18) auf beiden Seiten der Abdeckungen (4,6) aufweisen, wobei in beiden der geschlossenen Positionen eine der betriebsfähigen Oberflächen (10, 18) auf einer äußeren Oberfläche angeordnet ist, die von dem Gehäuse (2) weg weist und von außen zugänglich ist.

2. Mobiles Endgerät gemäß Anspruch 1, wobei die Abdeckungen (4, 6) ausgelegt sind, nur einen Teil der vorderen Oberfläche des mobilen Endgeräts abzudecken und im Bereich eines Tastenfeldes angeordnet sind, sodass eine Anzeige in dem Gehäuse (2) in den geschlossenen Positionen und in der offenen Position der Abdeckungen (4, 6) sichtbar ist.

3. Mobiles Endgerät gemäß Anspruch 2, umfassend eine Tastatur, die sich auf beide Abdeckungen erstreckt, wobei die Abdeckungen in zwei verschiedenen geschlossenen Positionen angeordnet werden können, in denen die zwei Abdeckungen zwei verschiedene kleine Tastenfelder bereitstellen, und wobei die Abdeckungen eine größere Tastatur bereitstellen, wenn beide Abdeckungen geöffnet sind.

4. Mobiles Endgerät gemäß einem der vorstehenden Ansprüche, wobei sich die betriebsfähige Oberfläche (10), die in der ersten geschlossen Position von außen zugänglich ist, von der betriebsfähigen Oberfläche (18) unterscheidet, die in der zweiten geschlossen Position von außen zugänglich ist.

5. Mobiles Endgerät gemäß einem der vorstehenden Ansprüche, wobei die Abdeckungen zu einer offenen Position bewegt werden können, in der eine Oberfläche des Gehäuses (2) freiliegt.

6. Mobiles Endgerät gemäß Anspruch 5, wobei in der offenen Position alle betriebsfähigen Oberflächen verwendbar sind.

7. Mobiles Endgerät gemäß einem der Ansprüche 1 bis 6, wobei das Gehäuse (2) eine betriebsfähige Oberfläche (14) auf einem Teil des Gehäuses (2) aufweist, der in den geschlossenen Positionen durch eine der Abdeckungen (4, 6) abgedeckt ist.

8. Mobiles Endgerät gemäß einem der Ansprüche 1 bis 7, wobei in der offenen Position die betriebsfähige Oberfläche (14) des Gehäuses und mindestens eine der betriebsfähigen Oberflächen (10/12, 16/18) der Abdeckungen (4, 6) verwendbar sind.

9. Mobiles Endgerät gemäß einem der Ansprüche 1 bis 8, wobei die mindestens zwei Abdeckungen (4, 6) einen dreieckigen Querschnitt aufweisen.

10. Mobiles Endgerät gemäß einem der Ansprüche 1 bis 9, weiter mindestens eine Anzeige umfassend.

11. Mobiles Endgerät gemäß einem der Ansprüche 1 bis 10, wobei mindestens eine der Abdeckungen (4, 6) abnehmbar an dem Gehäuse (2) befestigt ist.

12. Mobiles Endgerät gemäß einem der vorstehenden Ansprüche, wobei mindestens eine der mindestens vier betriebsfähigen Oberflächen (10/12, 16/18) der Abdeckungen (4, 6) abnehmbar befestigt ist.

13. Mobiles Endgerät gemäß einem der vorstehenden Ansprüche, weiter umfassend Schaltmittel, um mindestens eine der betriebsfähigen Oberflächen (10/12, 16/18) zu aktivieren oder zu deaktivieren.

14. Mobiles Endgerät wie in einem der Ansprüche 1 bis 13 beschrieben, wobei das mobile Endgerät eine mobile Kommunikationsvorrichtung, ein mobiler Computer oder eine mobile faltbare Tastatur ist.

## Revendications

1. Dispositif de terminal mobile, comprenant :
- un boîtier (2) ;
- un premier couvercle fonctionnel (4) et un deuxième couvercle fonctionnel (6), les deux fixés de manière pivotante audit boîtier (2) ; dans lequel lesdits couvercles (4, 6) peuvent être déplacés entre deux positions fermées,
- dans lequel dans une première position fermée ledit premier couvercle (4) est conforme avec une partie dudit boîtier adjacente audit premier couvercle, et ledit deuxième couvercle (6) chevauche ledit premier couvercle (4) de façon conforme, et dans une deuxième position fermée ledit deuxième couvercle (6) est adjacent à et conforme à une partie dudit boîtier (2) adjacente audit deuxième couvercle (6), et ledit premier couvercle (4) chevauche ledit deuxième couvercle (6) de façon conforme,
**caractérisé en ce que**
lesdits couvercles fonctionnels (4, 6) ont chacun des surfaces opérationnelles (10/12, 16/18) sur les deux côtés desdits couvercles (4, 6), où dans les deux desdites positions fermées l'une desdites surfaces opérationnelles (10, 18) est située sur une surface externe éloignée dudit boîtier (2) et qui est accessible depuis l'extérieur.

2. Dispositif de terminal mobile selon la revendication 1, dans lequel lesdits couvercles (4, 6) sont conçus pour couvrir uniquement une partie de la surface avant du dispositif mobile et sont situés dans la région d'un clavier de telle sorte qu'un afficheur dans le boîtier (2) soit visible dans les positions fermée et ouverte des couvercles (4, 6).

3. Dispositif de terminal mobile selon la revendication 2, comprenant un clavier s'étendant auxdits deux couvercles, dans lequel lesdits couvercles peuvent être agencés dans deux positions fermées différentes, fournissant ainsi deux petits claviers différents par lesdits deux couvercles, et un clavier plus grand, lorsque lesdits deux couvercles sont ouverts.

4. Dispositif de terminal mobile selon l'une quelconque des revendications précédentes, dans lequel ladite surface opérationnelle (10) accessible depuis l'extérieur dans ladite première position fermée est différente de ladite surface opérationnelle (18) accessible depuis l'extérieur dans ladite deuxième position fermée.

5. Dispositif de terminal mobile selon l'une quelconque des revendications précédentes, dans lequel lesdits couvercles peuvent être déplacés vers une position ouverte, où une surface du boîtier est exposée.

6. Dispositif de terminal mobile selon la revendication 5, dans lequel dans ladite position ouverte toutes les surfaces opérationnelles sont utilisables.

7. Dispositif de terminal mobile selon l'une quelconque des revendications 1 à 6, dans lequel ledit boîtier (2) a une surface opérationnelle (14) sur une partie dudit boîtier (2) couverte par l'un des couvercles (4, 6) dans lesdites positions fermées.

8. Dispositif de terminal mobile selon l'une quelconque des revendications 1 à 7, dans lequel dans ladite position ouverte ladite surface opérationnelle (14) dudit boîtier et au moins l'une desdites surfaces opérationnelles (10/12, 16/18) desdits couvercles (4, 6) sont utilisables.

9. Dispositif de terminal mobile selon l'une quelconque des revendications 1 à 8, dans lequel lesdits au moins deux couvercles (4, 6) ont une coupe transversale triangulaire.

10. Dispositif de terminal mobile selon l'une quelconque des revendications 1 à 9, comprenant de plus au moins un afficheur.

11. Dispositif de terminal mobile selon l'une quelconque des revendications 1 à 10, dans lequel au moins l'un desdits couvercles (4, 6) est fixé de manière détachable audit boîtier (2).

12. Dispositif de terminal mobile selon l'une quelconque des revendications précédentes, dans lequel au moins l'une desdites au moins quatre surfaces opérationnelle (10/12, 16,/18) desdits couvercles (4, 6) est fixée de manière détachable.

13. Dispositif de terminal mobile selon l'une quelconque des revendications précédentes, comprenant de plus un moyen de commutation pour activer ou désactiver au moins l'une desdites surfaces opérationnelle (10, 12, 14, 16, 18).

14. Dispositif de terminal mobile comme décrit dans l'une quelconque des revendications 1 à 13, dans lequel ledit dispositif de terminal mobile est un dispositif de communication mobile, un dispositif d'ordinateur portable ou un clavier pliable mobile.
